# EUROPEAN PATENT SPECIFICATION

(11) **EP 3 020 312 B1**
(45) Date of publication and mention of the grant of the patent: **02.01.2019**
(21) Application number: 15194231.5
(22) Date of filing: 12.11.2015
(51) Int. Cl.: A47J 31/44

(54) **DEVICE AND METHOD FOR FROTHING MILK**
VORRICHTUNG UND VERFAHREN ZUM AUFSCHÄUMEN VON MILCH
DISPOSITIF ET PROCÉDÉ POUR FAIRE MOUSSER DU LAIT

(30) Priority: 14.11.2014 IT MI20141968
(43) Date of publication of application: 18.05.2016
(73) Proprietor: De'Longhi Appliances S.r.l., 31100 Treviso (IT)
(72) Inventor: DE' LONGHI, Giuseppe, 31100 TREVISO (IT); PANCIERA, Antonio, 31030 CARBONERA (TREVISO) (IT)
(74) Representative: Rapisardi, Mariacristina

(56) References cited:
- GB-A- 2 311 332
- US-A- 5 611 262

## Description

The present invention relates to a frothing device for milk particularly but not exclusively of the type that can be associated with the steam dispenser of a coffee machine. Document US-A-5 611 262 (see Figure 2) discloses a frothing device for milk comprising a containment body for the milk and a mixing body 40 comprising a mixing chamber, a conduit for supplying the milk to the mixing chamber, a conduit 48 for supplying steam to the mixing chamber, a conduit for supplying air to the mixing chamber, and an outlet conduit 66 for the milk mixed with air and steam from the mixing chamber.

A frothing device for milk of the known type comprises a containment body for the milk and a mixing body positioned above the milk containment body. The mixing body in turn comprises a Venturi-shaped mixing chamber, a conduit for supplying milk to the mixing chamber, a conduit for supplying steam to the mixing chamber, a conduit for suppling air to the mixing chamber and an outlet conduit for the frothed milk from the mixing chamber. When the flow of steam is dispensed, thanks to the depression created in the mixing chamber, the milk supply conduit sucks the milk from the milk containment body below. However, the flow of sucked milk varies greatly according to the filling level of the milk containment body and, more precisely, the flow of sucked milk decreases as the milk containment body is emptied. In fact, as the level of milk decreases, the head required by the suction system to lift the milk and take it to the mixing chamber increases.

Under this circumstance, the proportion of milk in the mixture of air, steam and milk contained in the mixing chamber is variable and does not ensure that the milk is frothed properly.

The technical task of the present invention is, therefore, to provide a milk frothing device which obviates the above-described technical drawbacks of the prior art. Within the scope of this technical task, an object of the invention is to provide a milk frothing device which allows constant proportions of steam, air and milk to be mixed so as to guarantee that the frothing is performed properly.

The technical task, as well as these and other objects, according to the present invention, are reached by providing a frothing device for milk comprising a containment body for the milk and a mixing body in turn comprising a mixing chamber, a conduit for supplying the milk to the mixing chamber, a conduit for supplying steam to the mixing chamber, a conduit for supplying air to the mixing chamber, and an outlet conduit for the milk mixed with air and steam from the mixing chamber, characterised in that said milk containment body comprises a first open top vessel in which one end of the milk supply conduit is positioned and a second vessel having a closing ceiling communicating with the first vessel through a connection opening positioned at a distance from the ceiling, said first open top vessel being distinct and separate from said conduit for supplying air.

In a preferred embodiment of the invention the second vessel has a lateral wall closed from above by the ceiling and below by a bottom, the opening being afforded at the base of the lateral wall of the second vessel.

In a preferred embodiment of the invention the first vessel is positioned laterally to the second vessel and has a lateral wall closed from below by a bottom, the opening being afforded at the base of the lateral wall of the first vessel.

In a preferred embodiment of the invention the containment body comprises at least two separate and distinct disengageable parts for filling the second vessel.

In a preferred embodiment of the invention the mixing body comprises at least two separate and distinct disengageable parts, and the mixing chamber is delimited by surfaces belonging to said at least two distinct and separate parts of the mixing body.

In a preferred embodiment of the invention the milk supply conduit, the air supply conduit and the steam supply conduit are delimited by surfaces belonging to said at least two distinct and separate parts of the mixing body.

In a preferred embodiment of the invention said at least two separate and distinct parts of the mixing body and respectively of the containment body are reciprocally engageable by shape and/or by friction.

In a preferred embodiment of the invention at least one of said at least two separate and distinct parts of the mixing body is made of rubber.

In a preferred embodiment of the invention the mixing chamber is Venturi shaped.

In a preferred embodiment of the invention the mixing body and the containment body are rigidly connected to one another.

In a preferred embodiment of the invention the milk frothing device has sensor of the presence of milk in the second vessel.

In a preferred embodiment of the invention the milk frothing device has a lid for closing the first vessel, mobile between a closed position and an open position.

In a preferred embodiment of the invention the outlet conduit has a mobile terminal for accessing the inside of the outlet conduit.

The present invention also discloses a coffee machine comprising such a milk frothing device.

The present invention finally discloses a method for frothing milk with a milk frothing device comprising a mixing body in turn comprising a Venturi effect mixing chamber, a conduit for supplying the milk to the mixing chamber, a conduit for supplying steam to the mixing chamber, a conduit for supplying air to the mixing chamber, and an outlet conduit for the milk mixed with air and steam from the mixing chamber, characterised in that the milk supply conduit is connected to an open top vessel containing the milk and distinct and separate from said conduit for supplying air, a flow of milk is sucked into the mixing chamber and, during at least part of the milk suction, the vessel is refilled in real time with a flow of refilling milk equal to the flow of milk sucked to maintain a constant level of milk in the vessel.

Other characteristics of the present invention are also defined in the claims herein below.

Further characteristics and advantages of the invention will more fully emerge from the description of a preferred but not exclusive embodiment of the milk frothing device according to the invention, illustrated by way of non-limiting example in the accompanying figures of the drawings, in which:

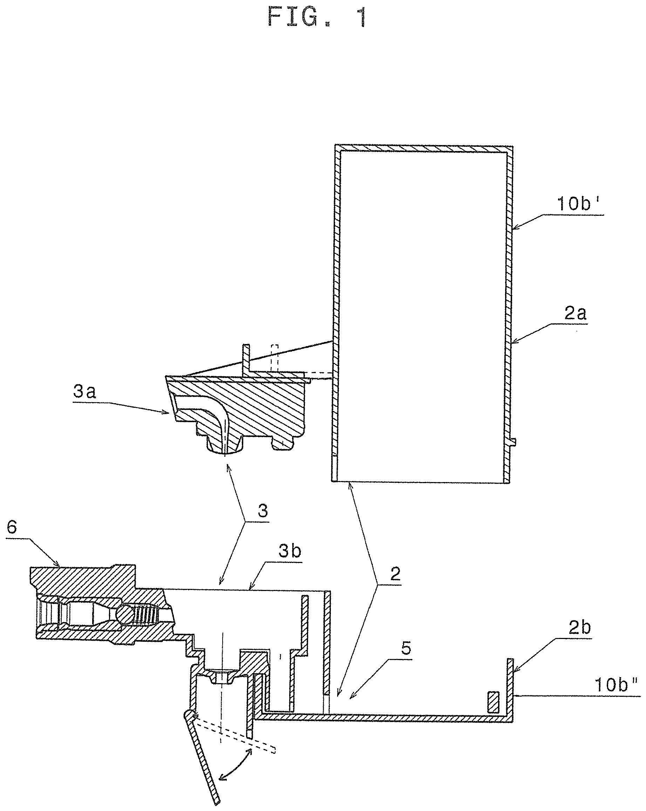

figure 1 shows a raised lateral sectional view of the frothing device with an exploded view of its components;

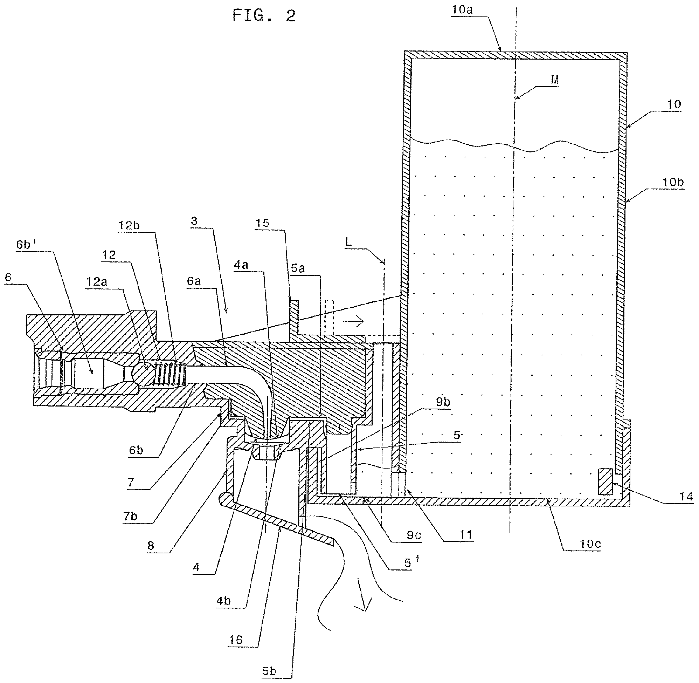

figure 2 shows a raised lateral sectional view of the assembled frothing device;

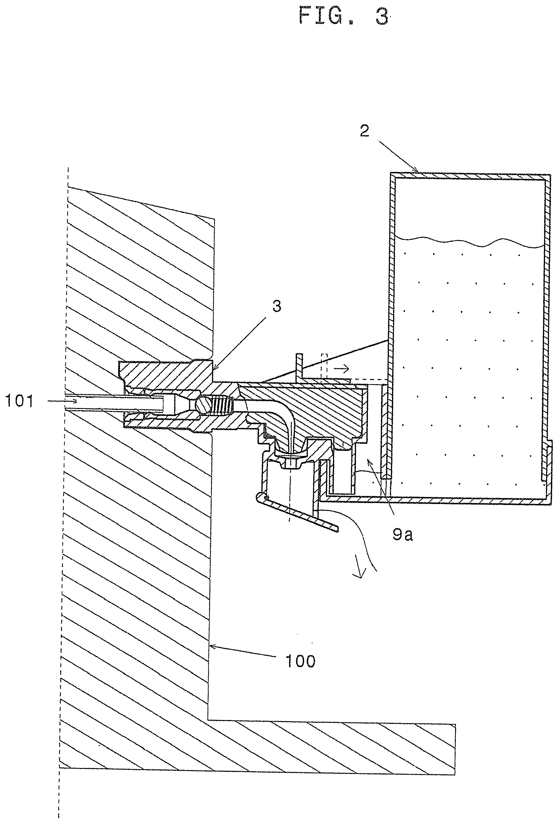

figure 3 shows a raised lateral sectional view of the frothing device associated with the steam dispenser of a coffee machine;

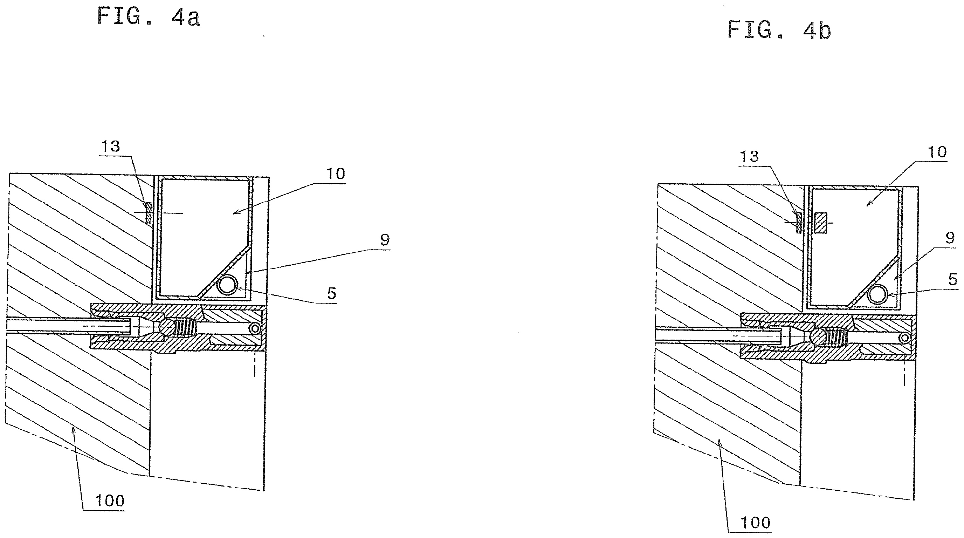

figures 4a and 4b show a plan sectional view from above of the frothing device associated with the steam dispenser of a coffee machine in two possible versions for the milk presence sensor;

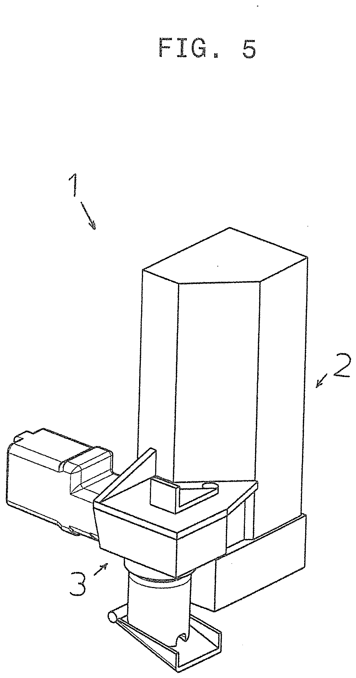

figure 5 shows a perspective view of the frothing device.

With reference to the cited figures, the milk frothing device 1 is of the type that can be associated with a coffee machine 100.

The milk frothing device 1 comprises a milk containment body 2 and a mixing body 3 rigidly connected to one another.

The mixing body 3 in turn comprises a Venturi-shaped mixing chamber 4, a conduit 5 for supplying milk to the mixing chamber 4, a conduit 6 for supplying steam to the mixing chamber 4, a conduit 7 for supplying air to the mixing chamber 4 and an outlet conduit 8 for the milk mixed with air and steam from the mixing chamber 4.

The milk containment body 2 comprises a first open top vessel 9 in which one end 5' of the milk supply conduit 5 is positioned and a second vessel 10 having a closing ceiling 10a communicating with the first vessel 9 through a connection opening 11 positioned at a distance from the ceiling 10a.

The second vessel 10 has a lateral wall 10b with a tubular conformation closed from above by the ceiling 10a and from below by a bottom 10c.

The opening 11 is afforded at the base of the lateral wall 10b of the second vessel 10.

The first vessel 9 is distinct and separate from the conduit 7 for supplying air to the mixing chamber 4.

The first vessel 9 is positioned laterally to the second vessel 10 and has a lateral wall 9b with a tubular conformation closed from below by a bottom 9c.

The opening 11 is afforded at the base of the lateral wall 9b of the first vessel 9.

The first vessel 9 and the second vessel 10 extend prevalently upwards according to parallel longitudinal axes L and M, respectively.

The second vessel 10 has a capacity and an upwards extension that are substantially greater than the first vessel 9.

The bottom 9c of the first vessel 9 and the bottom 10c of the second vessel 10 are flat and lie on the same lying plane orthogonal to the longitudinal axis L and M, respectively.

The containment body 2 comprises two separate and distinct disengageable parts 2a, 2b for the filling of the second vessel 10.

In particular, the ceiling 10a of the second vessel 10 and a portion 10b' of the lateral wall 10b of the second vessel 10 belong to part 2a, whereas the first vessel 9, the bottom 10c of the second vessel 10 and a portion 10b" of the lateral wall 10b of the second vessel 10 belong to part 2b.

The mixing body 3 also comprises two separate and distinct disengageable parts 3a, 3b.

The mixing chamber 4 is delimited by surfaces 4a, 4b belonging to the two distinct and separate parts 3a, 3b of the mixing body 3.

The milk supply conduit 5, the air supply conduit 7 and respectively, the steam supply conduit 6 are also delimited, by surfaces 5a, 5b, 7a, 7b and respectively, 6a, 6b, belonging to the two distinct and separate parts 3a, 4b of the mixing body 3. This construction of the mixing body 3 is particularly advantageous because it allows, when the mixing body 3 is disassembled, easy access to all the internal parts for inspection and cleaning.

Still with the aim of facilitating the inspection and cleaning operations, the outlet conduit 8 has a mobile terminal 16, in this case rotating, for access to the inside of the outlet conduit 8 itself.

Part 2a of the container body 2 and part 3a of the mixing body 3 are rigidly fixed to one another and constitute a first single block, and likewise part 2b of the container body 2 and part 3b of the mixing body 3 are rigidly fixed to one another and constitute a second single block.

The two separate and distinct parts 2a, 2b of the containment body 2 are reciprocally engageable by shape and/or by friction.

In particular the portions 10b' and 10b" have a conjugated shape for fitting into one another.

Likewise, the two separate and distinct parts 3a, 3b of the mixing body 3 are reciprocally engageable by shape and/or by friction.

In particular part 3a of the mixing body 3 is made of rubber.

A section 6a' of the steam supply conduit 6 comprising the access end to the mixing chamber 4 is provided in part 3a of the mixing body 3 made of rubber, whereas another section 6b' of the steam supply conduit 6 comprising the connection end to the steam dispenser is provided in part 3b preferably made of plastic of the mixing body 3.

In section 6b' of the steam supply conduit 6 a check valve 12 is assembled comprising for example a ball 12a activatable in contrast and by the action of a spring 12b.

The rubber component guarantees a coupling by fit and friction which guarantees the necessary fluid seal in the transition area from part 6a to part 6b of the steam supply conduit 6, the definition and seal of fluid of the calibrated sections of the milk supply conduit 5 and of the air supply conduit 7.

The milk frothing device 1 has a closing lid 15 of the first vessel 9, mobile between a closed position and an open position.

Such closing lid 15, as will become clearer below, is used to prevent accidental spills of milk when the containment body 3 overturns following the filling operation of the second vessel 10.

The closing lid 15 is integrated into the rubber part 3a of the mixing body 3 by which it is supported translatably orthogonal to the direction of the longitudinal axis M of the second vessel 10.

The milk frothing device 1 has a sensor 13 of the presence of milk in the second vessel 10.

The sensor 13 can be physically integrated into an external wall of the coffee machine 100 adjacent to which the second vessel 10 is positioned when the milk frothing device 1 is connected to the steam dispenser 101 of the coffee machine 100.

The sensor 13, positioned at the height of the base of the lateral wall 10b of the second vessel 10, can be of the mechanical type for detecting a float 14 positioned in the second vessel 10, or can be of the optical type for directly detecting the presence of the milk.

The operation of the milk frothing device 1 is briefly as follows.

Let's imagine the device 1 is initially still connected to the coffee machine 100 after dispensing. The steam supply conduit 6 is engaged with the coffee machine 100 dispenser 101, the first vessel 9 is empty and arranged with its axis L oriented vertically and its bottom 9c positioned below its access mouth 9a, the second vessel 10 is empty and arranged with its axis M oriented vertically and its bottom 10c positioned below its ceiling 10a.

The milk frothing device 1 is separated from the coffee machine 100 with a traction movement in the horizontal direction.

Subsequently parts 2a, 3a are separated from parts 2b, 3b and are overturned being subjected to a 180° rotation with respect to an axis of rotation orthogonal to the longitudinal axes L, M, so that in the second vessel 10 the ceiling 10a acts as a bottom to the second vessel 10.

Then the second vessel 10 is filled with milk up to an appropriate level, which can be advantageously marked by an indicator, for example a notch on the lateral wall 10b of the second vessel 10. The milk frothing device 1 is preferably configured for an operation which envisages, whenever the coffee machine 100 dispenses, the complete emptying of the containment body 2, so that various notches can be provided indicating different filling levels according to the final product to be obtained, for example a higher filling level for milk intended for making a cappuccino and a lower filling level for milk indented to make a latte macchiato.

After filling the second vessel 10 with milk to the desired level, parts 2b, 3b are united with parts 3a, 3b and the assembly thus obtained is rotated through 180° with respect to an orthogonal axis of rotation to the longitudinal axes L, M. Due to the effect of the rotation an initial flow of milk is created from the second vessel 10 to the first vessel 9 until the level of milk in the first vessel 9 fully covers the opening 11. Once the opening 10 is fully covered, the flow of milk towards the vessel 9 is interrupted because, by preventing any atmospheric air from returning towards the closed chamber that is created between the free surface of the milk present in the second vessel 10 and the ceiling 10a of the second vessel 10, the pressure of the atmospheric air acting on the free surface of the milk contained in the first vessel 9 balances the hydrostatic pressure of the column of milk contained in the second vessel 10.

At this point the milk frothing device 1 is connected with the coffee machine 100. When the coffee machine 100 controller commands the start of the steam dispensing, in the mixing chamber 4 a depression is created which recalls the milk from the first vessel 9 through the milk supply conduit 5.

Therefore, following the start of the dispensing of steam the level of milk in the first vessel 9 starts to drop until the opening 11 is uncovered. At this point the atmospheric air is again in the condition to be able to return upwards towards the closed chamber that is created between the free surface of the milk contained in the second vessel 10 and the ceiling 10a of the second vessel 10, thus a flow of milk is triggered from the second vessel 10 to the first vessel 9 through the opening 11 which lasts until the level of milk fully covers the opening 11 again. Consequently the second vessel 10 refills the first vessel 9 in real time with a flow of refilling milk equal to the flow of milk sucked to maintain a constant level of milk in the first vessel 9 at least until the free surface of the milk contained in the second vessel 10 remains at a higher level than the opening 11, after which the level of milk in the first vessel 9 and the level of milk in the second vessel 10 drop simultaneously until the complete emptying of the containment body 2 which is signalled by the sensor 14 to the coffee machine controller to interrupt the dispensing of steam.

Advantageously the appropriate sizing and positioning of the opening 11 at the base of the lateral wall 10b of the second vessel 10 allows a constant level of milk to be maintained in the first vessel 9 during the suction of at least most of the quantity of milk with which the containment body 2 has been filled.

The maintenance of a constant level of milk in the vessel 9 from which the milk is sucked which feeds the mixing chamber 4 advantageously allows fluctuations in the flow of milk sucked to be prevented with the result that steam, air and milk are mixed in a constant proportion in the mixing chamber 4 giving rise to properly frothed milk.

The milk frothing device as conceived herein is susceptible to many modifications and variations, all falling within the scope of the claims.

## Claims

1. A frothing device for milk (1) comprising a containment body (2) for the milk and a mixing body (3) in turn comprising a mixing chamber (4), a conduit (5) for supplying the milk to the mixing chamber (4), a conduit (6) for supplying steam to the mixing chamber (4), a conduit (7) for supplying air to the mixing chamber (4), and an outlet conduit (8) for the milk mixed with air and steam from the mixing chamber (4), **characterised in that** said milk containment body (2) comprises a first open top vessel (9) in which one end of the milk supply conduit (5) is positioned and a second vessel (10) having a closing ceiling (10a) communicating with the first vessel (9) through a connection opening (11) positioned at a distance from the ceiling (10a), said first open top vessel (9) being distinct and separate from said conduit (7) for supplying air.

2. The milk frothing device (1) according to the preceding claim, **characterised in that** said second vessel (10) has a lateral wall (10b) closed from above by said ceiling (10a) and below by a bottom (10c), said opening (11) being afforded at the base of said lateral wall (10b) of said second vessel (10).

3. The milk frothing device (1) according to any one of the preceding claims, **characterised in that** said first vessel (9) is positioned laterally to said second vessel (10) and has a lateral wall (9b) closed from below by a bottom (9c), said opening (11) being afforded at the base of said lateral wall (9b) of said first vessel (9).

4. The milk frothing device (1) according to any one of the preceding claims, **characterised in that** said containment body (2) comprises at least two separate and distinct parts (2a, 2b) disengageable for filling the second vessel (10).

5. The milk frothing device (1) according to any one of the preceding claims, **characterised in that** said mixing body (3) comprises at least two separate and distinct disengageable parts (3a, 3b), and **in that** said mixing chamber (3) is delimited by surfaces belonging to said at least two separate and distinct parts (3a, 3b) of said mixing body (3).

6. The milk frothing device (1) according to the preceding claim, **characterised in that** said milk supply conduit (5), said air supply conduit (7) and said steam supply conduit (6) are delimited by surfaces belonging to said at least two distinct and separate parts (3a, 3b) of said mixing body (3).

7. The milk frothing device (1) according to any one of claims 4 to 6, **characterised in that** said at least two separate and distinct parts (2a, 2b e 3a, 3b) are reciprocally engageable by shape and/or friction.

8. The milk frothing device (1) according to any one of claims 5 to 7, **characterised in that** at least one (3a) of said at least two separate and distinct parts (3a, 3b) of said mixing body (3) is made of rubber.

9. The milk frothing device (1) according to any one of the preceding claims, **characterised in that** said mixing chamber (4) is Venturi shaped.

10. The milk frothing device (1) according to any one of the preceding claims, **characterised in that** said mixing body (3) and said containment body (2) are rigidly connected to one another.

11. The milk frothing device (1) according to any one of the preceding claims, **characterised in that** it has a sensor (13) of the presence of milk in the second vessel (10).

12. The milk frothing device (1) according to any one of the preceding claims, **characterised in that** it has a lid (15) for closing the first vessel (9), mobile between a closed position and an open position.

13. The milk frothing device (1) according to any one of the preceding claims, **characterised in that** said outlet conduit (8) has a mobile terminal (16) for accessing the inside of the outlet conduit (8).

14. A coffee machine (100) comprising a milk frothing device (1) according to any one of the preceding claims.

15. A method for frothing milk with a milk frothing device (1) comprising a mixing body (3) in turn comprising a Venturi effect mixing chamber (4), a conduit (5) for supplying the milk to the mixing chamber (4), a conduit (6) for supplying steam to the mixing chamber (4), a conduit (7) for supplying air to the mixing chamber (4), and an outlet conduit (8) for the milk mixed with air and steam from the mixing chamber (4), **characterised in that** the milk supply conduit (5) is connected to an open top vessel (9) containing the milk and distinct and separate from said conduit (7) for supplying air, a flow of milk is sucked into the mixing chamber (4) and, during at least part of the milk suction, the vessel (9) is refilled in real time with a flow of refilling milk equal to the flow of milk sucked to maintain a constant level of milk in the vessel (9).

## Patentansprüche

1. Vorrichtung zum Aufschäumen von Milch (1), umfassend einen Behälterkörper (2) für die Milch und einen Mischkörper (3), der wiederum eine Mischkammer (4), eine Leitung (5) zur Zuführung der Milch zur Mischkammer (4), eine Leitung (6) zur Zuführung von Dampf zur Mischkammer (4), eine Leitung (7) zur Zuführung von Luft zur Mischkammer (4) umfasst, und eine Auslassleitung (8) für die mit Luft und Dampf gemischte Milch aus der Mischkammer (4), **dadurch gekennzeichnet, dass** der Milchbehälterkörper (2) ein erstes offenes oberes Gefäß (9) umfasst, in dem ein Ende der Milchzuführungsleitung (5) positioniert ist, und ein zweites Gefäß (10), aufweisend eine Verschlussdecke (10a), kommunizierend mit dem ersten Gefäß (9) durch eine Verbindungsöffnung (11), positioniert in einem Abstand von der Decke (10a), wobei das erste offene obere Gefäß (9) unterschieden und getrennt von der Leitung (7) zur Zuführung von Luft ist.

2. Vorrichtung zum Aufschäumen von Milch (1) nach dem vorhergehenden Anspruch, **dadurch gekennzeichnet, dass** das zweite Gefäß (10) eine Seitenwand (10b) aufweist, die von oben durch die Decke (10a) und unten durch einen Boden (10c) verschlossen ist, wobei die Öffnung (11) an der Basis der Seitenwand (10b) des zweiten Gefäßes (10) ausgebildet ist.

3. Vorrichtung zum Aufschäumen von Milch (1) nach einem der vorhergehenden Ansprüche, **dadurch gekennzeichnet, dass** das erste Gefäß (9) seitlich zum zweiten Gefäß (10) positioniert ist und eine Seitenwand (9b) aufweist, die von unten durch einen Boden (9c) verschlossen ist, wobei die Öffnung (11) an der Basis der Seitenwand (9b) des ersten Gefäßes (9) ausgebildet ist.

4. Vorrichtung zum Aufschäumen von Milch (1) nach einem der vorhergehenden Ansprüche, **dadurch gekennzeichnet, dass** der Behälterkörper (2) mindestens zwei separate und unterschiedliche Teile (2a, 2b) umfasst, die zum Füllen des zweiten Gefäßes (10) lösbar sind.

5. Vorrichtung zum Aufschäumen von Milch (1) nach einem der vorhergehenden Ansprüche, **dadurch gekennzeichnet, dass** der Mischkörper (3) mindestens zwei separate und unterschiedliche lösbare Teile (3a, 3) umfasst und dass die Mischkammer (3) durch Oberflächen abgegrenzt ist, die den mindestens zwei separaten und unterschiedlichen Teilen (3a, 3b) des Mischkörpers (3) angehören.

6. Vorrichtung zum Aufschäumen von Milch (1) nach dem vorhergehenden Anspruch, **dadurch gekennzeichnet, dass** die Milchzuführungsleitung (5), die Luftzuführungsleitung (7) und die Dampfzuführungsleitung (6) von Oberflächen abgegrenzt sind, die den mindestens zwei unterschiedlichen und separaten Teilen (3a, 3b) des Mischkörpers (3) angehören.

7. Vorrichtung zum Aufschäumen von Milch (1) nach einem der Ansprüche 4 bis 6, **dadurch gekennzeichnet, dass** die mindestens zwei separaten und unterschiedlichen Teile (2a, 2b und 3a, 3b) gegenseitig durch Form und/oder Reibung ineinander eingreifen können.

8. Vorrichtung zum Aufschäumen von Milch (1) nach einem der Ansprüche 5 bis 7, **dadurch gekennzeichnet, dass** mindestens einer (3a) der mindestens zwei separaten und unterschiedlichen Teile (3a, 3b) des Mischkörpers (3) aus Gummi besteht.

9. Vorrichtung zum Aufschäumen von Milch (1) nach einem der vorhergehenden Ansprüche, **dadurch gekennzeichnet, dass** die Mischkammer (4) eine Venturi-Form aufweist.

10. Vorrichtung zum Aufschäumen von Milch (1) nach einem der vorhergehenden Ansprüche, **dadurch gekennzeichnet**, der Mischkörper (3) und der Behälterkörper (2) steif miteinander verbunden sind.

11. Vorrichtung zum Aufschäumen von Milch (1) nach einem der vorhergehenden Ansprüche, **dadurch gekennzeichnet, dass** sie einen Sensor (13) von Milchanwesenheit im zweiten Gefäß (10) aufweist.

12. Vorrichtung zum Aufschäumen von Milch (1) nach einem der vorhergehenden Ansprüche, **dadurch gekennzeichnet, dass** sie einen Deckel (15) zum Verschließen des ersten Gefäßes (9) aufweist, der zwischen einer geschlossenen Position und einer offenen Position mobil ist.

13. Vorrichtung zum Aufschäumen von Milch (1) nach einem der vorhergehenden Ansprüche, **dadurch gekennzeichnet, dass** die Auslassleitung (8) ein mobiles Endstück (16) für den Zugriff auf die Innenseite der Auslassleitung (8) aufweist.

14. Kaffeemaschine (100), umfassend eine Vorrichtung zum Aufschäumen von Milch (1) nach einem der vorhergehenden Ansprüche.

15. Verfahren zum Aufschäumen von Milch mit einer Vorrichtung zum Aufschäumen von Milch (1), umfassend einen Mischkörper (3), der wiederum eine Mischkammer mit Venturi-Effekt (4), eine Leitung (5) zur Zuführung der Milch zur Mischkammer (4), eine Leitung (6) zur Zuführung von Dampf zur Mischkammer (4), eine Leitung (7) zur Zuführung von Luft zur Mischkammer (4) und eine Auslassleitung (8) für die mit Luft und Dampf gemischte Milch aus der Mischkammer (4) umfasst, **dadurch gekennzeichnet, dass** die Milchzuführungsleitung (5) mit einem offenen oberen Gefäß (9) verbunden ist, das die Milch enthält, und unterschiedlich und separat von der Leitung (7) zur Zuführung von Luft, ein Milchstrom in die Mischkammer (4) angesaugt wird und das Gefäß (9) während mindestens eines Teils der Milchansaugung in Echtzeit erneut mit einem Strom von Nachfüllmilch gefüllt wird, der gleich dem angesaugten Milchstrom ist, um ein konstantes Niveau an Milch im Gefäß (9) aufrechtzuerhalten.

## Revendications

1. Dispositif (1) pour faire mousser le lait comprenant un corps de contenance (2) pour le lait et un corps mélangeur (3) comprenant à son tour une chambre de mélange (4), un conduit (5) pour alimenter en lait la chambre de mélange (4), un conduit (6) pour alimenter en vapeur la chambre de mélange (4), un conduit (7) pour alimenter en air la chambre de mélange (4) et un conduit de sortie (8) pour le lait, mélangé à l'air et à la vapeur, provenant de la chambre de mélange (4), **caractérisé en ce que** ledit corps de contenance (2) du lait comprend un premier récipient à ciel ouvert (9) dans lequel est positionnée une extrémité du conduit d'alimentation en lait (5) et un second récipient (10) comportant un plafond de fermeture (10a) communiquant avec le premier récipient (9) à travers une ouverture de raccordement (11) positionnée à une certaine distance du plafond (10a), ledit premier récipient à ciel ouvert (9) étant distinct et séparé dudit conduit (7) pour l'alimentation en air.

2. Dispositif (1) pour faire mousser le lait selon la revendication précédente, **caractérisé en ce que** ledit second récipient (10) comporte une cloison latérale (10b) fermée sur le dessus par ledit plafond (10a) et par dessous par un fond (10c), ladite ouverture (11) étant réalisée à la base de ladite cloison latérale (10b) dudit second récipient (10) .

3. Dispositif (1) pour faire mousser le lait selon l'une quelconque des revendications précédentes, **caractérisé en ce que** ledit premier récipient (9) est positionné latéralement par rapport au dit second récipient (10) et comporte une cloison latérale (9b) fermée par dessous par un fond (9c), ladite ouverture (11) étant réalisée à la base de ladite cloison latérale (9b) dudit premier récipient (9) .

4. Dispositif (1) pour faire mousser le lait selon l'une quelconque des revendications précédentes, **caractérisé en ce que** ledit corps de contenance (2) comprend au moins deux parties séparées et distinctes (2a, 2b) pouvant se désengager pour remplir le second récipient (10).

5. Dispositif (1) pour faire mousser le lait selon l'une quelconque des revendications précédentes, **caractérisé en ce que** ledit corps mélangeur (3) comprend au moins deux parties (3a, 3b) séparées et distinctes pouvant se désengager, et **en ce que** ladite chambre de mélange (3) est délimitée par des surfaces appartenant auxdites au moins deux parties (3a, 3b) séparées et distinctes dudit corps mélangeur (3).

6. Dispositif (1) pour faire mousser le lait selon la revendication précédente, **caractérisé en ce que** ledit conduit (5) alimentant en lait, ledit conduit (7) alimentant en air et ledit conduit (6) alimentant en vapeur sont délimités par des surfaces appartenant auxdites au moins deux parties (3a, 3b) distinctes et séparées dudit corps mélangeur (3).

7. Dispositif (1) pour faire mousser le lait selon l'une quelconque des revendications de 4 à 6, **caractérisé en ce que** lesdites au moins deux parties (2a, 2b et 3a, 3b) séparées et distinctes peuvent réciproquement se mettre en prise selon leur forme et/ou par friction.

8. Dispositif (1) pour faire mousser le lait selon l'une quelconque des revendications de 5 à 7, **caractérisé en ce qu'**au moins l'une (3a) desdites au moins deux parties (3a, 3b) séparées et distinctes dudit corps mélangeur (3) est en caoutchouc.

9. Dispositif (1) pour faire mousser le lait selon l'une quelconque des revendications précédentes, **caractérisé en ce que** ladite chambre de mélange (4) a la forme d'un Venturi.

10. Dispositif (1) pour faire mousser le lait selon l'une quelconque des revendications précédentes, **caractérisé en ce que** ledit corps mélangeur (3) et ledit corps de contenance (2) sont reliés l'un à l'autre de façon rigide.

11. Dispositif (1) pour faire mousser le lait selon l'une quelconque des revendications précédentes, **caractérisé en ce qu'**il comporte un détecteur (13) de la présence de lait dans le second récipient (10) .

12. Dispositif (1) pour faire mousser le lait selon l'une quelconque des revendications précédentes, **caractérisé en ce qu'**il comporte un couvercle (15), servant à fermer le premier récipient (9), mobile entre une position de fermeture et une position d'ouverture.

13. Dispositif (1) pour faire mousser le lait selon l'une quelconque des revendications précédentes, **caractérisé en ce que** ledit conduit de sortie (8) comporte une extrémité mobile (16) pour accéder à l'intérieur du conduit de sortie (8).

14. Machine à café (100) comprenant un dispositif (1) pour faire mousser le lait selon l'une quelconque des revendications précédentes.

15. Procédé pour faire mousser le lait avec un dispositif (1) servant à faire mousser le lait comprenant un corps mélangeur (3) comprenant à son tour une chambre de mélange (4) à effet Venturi, un conduit (5) pour alimenter en lait la chambre de mélange (4), un conduit (6) pour alimenter en vapeur la chambre de mélange (4), un conduit (7) pour alimenter en air la chambre de mélange (4), et un conduit de sortie (8) pour le lait mélangé à l'air et à la vapeur provenant de la chambre de mélange (4), **caractérisé en ce que** le conduit (5) alimentant en lait est relié à un récipient à ciel ouvert (9) contenant le lait et distinct et séparé dudit conduit (7) pour alimenter en air, un flux de lait est aspiré dans la chambre de mélange (4) et, pendant au moins une partie de l'aspiration du lait, le récipient (9) est rempli en temps réel avec un flux de lait de remplissage équivalent au flux de lait aspiré pour maintenir un niveau constant de lait dans le récipient (9).
